(19) Europäisches Patentamt
European Patent Office
Office européen des brevets

(11) EP 1 101 802 B1

(12) EUROPÄISCHE PATENTSCHRIFT

(45) Veröffentlichungstag und Bekanntmachung des Hinweises auf die Patenterteilung:
**26.09.2007 Patentblatt 2007/39**

(21) Anmeldenummer: **00124045.6**

(22) Anmeldetag: **04.11.2000**

(51) Int Cl.:
***C09C 1/30*** *(2006.01)* ***C07F 7/18*** *(2006.01)*
***C08K 9/06*** *(2006.01)* ***C08K 9/12*** *(2006.01)*
***C08L 21/00*** *(2006.01)* ***C09C 1/56*** *(2006.01)*

# (54) Granulatförmige Organosilan-Präparation, Verfahren zu ihrer Herstellung und ihrer Verwendung

Organo silane preparation in granulated form, process of its manufacture and use

Préparation de silane organique sous forme de granule, procédé de sa production et son utilisation

(84) Benannte Vertragsstaaten:
**AT BE CH CY DE DK ES FI FR GB GR IE IT LI LU MC NL PT SE TR**

(30) Priorität: **20.11.1999 DE 19955850**

(43) Veröffentlichungstag der Anmeldung:
**23.05.2001 Patentblatt 2001/21**

(73) Patentinhaber: **Degussa GmbH
40474 Düsseldorf (DE)**

(72) Erfinder:
- **Eichenauer, Kurt
63628 Bad Soden-Salmünster (DE)**
- **Pitsch, Holger
63533 Mainhausen (DE)**
- **Klose, Michael
60320 Frankfurt/Main (DE)**
- **Vogler, Conny, Dr.
53332 Bornheim-Sechtem (DE)**
- **Kopiet, Jan
58730 Fröndenberg (DE)**
- **Kriesch, Helmut
50226 Frechen (DE)**

(56) Entgegenhaltungen:
**EP-A- 0 795 579**
**EP-A- 0 799 866**
**EP-A- 0 955 343**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 101 802 B1

**Beschreibung**

Die Erfindung betrifft eine Organosilan-Präparation, ein Verfahren zu ihrer Herstellung, sowie ihre Verwendung.

Organosiliciumverbindungen werden in der Kautschuktechnologie verwendet. Bekannt ist insbesondere die Verwendung von Schwefel enthaltenden Alkoxysilanen, die hervorragend als Haftvermittler und Verstärker für Vulkanisate aus silikatische Füllstoffe enthaltenden Kautschukmischungen geeignet sind. Hierzu zählen insbesondere die Organosilane gemäß US-PS 38 42 111.

Bekannt sind auch die Verstärkungsadditive für die Kautschukvulkanisate, die aus den flüssigen Organosilanen der US-PS 38 42 111 und silikatischen Füllstoffen hergestellt werden (DE-PS 22 55 577 und US-PS 39 97 356).

Auch EP 0735579 (A1) beschreibt silanmodifizierte silikatische Füllstoffe.

Alle Organosilane, die für den genannten Verwendungszweck bisher Eingang in die Technik gefunden haben, sind hydrolysierbare Flüssigkeiten, die bei Kontakt mit gasförmigem oder flüssigem Wasser unter Alkoholabspaltung zu hochmolekularen Polysiloxanen kondensieren und dadurch zumindest teilweise ihre Wirksamkeit als Verstärkungsadditive verlieren können.

In der kautschukverarbeitenden Industrie haben bei Raumtemperatur flüssige Hilfschemikalien, so auch die flüssigen Organosilane, schwerwiegende Nachteile im Vergleich zu festen pulverförmigen Hilfschemikalien. Sie erfordern höheren Aufwand bei der Lagerung in Silos, bei dem Abwiegen und Dosieren. Vor allem zeigen sie bei dem Herstellen der Mischungen auf Walzenmischern eine schlechte Einmischbarkeit.

Um diese Nachteile auszugleichen vermischt man flüssige Organosilane mit pulverförmigen Füllstoffen, um auf diese Weise pulverförmige Produkte zu erhalten. Dies bringt zwar einen gewissen Fortschritt, stellt aber keine optimale Lösung dar; denn auch pulverförmige Produkte sind in Kautschukmischungen verhältnismäßig schwierig einzubringen. So werden verlängerte Mischzeiten benötigt. Durch die Verstaubung tritt eine Belästigung und Verunreinigung der Umgebung und des Maschinenparks ein. Weiterhin wurde festgestellt, daß die Hydrolyseempfindlichkeit der Silane nicht beseitigt wird. Zudem erfahren sie einen deutlichen Wirksamkeitsverlust bei der Lagerung des Produktes. Dies drückt sich zum Beispiel in einem Absinken der Vernetzungsendwerte bei der Kautschukvulkanisation aus.

Bekannt sind auch Gemische aus Organosilanen der Formel

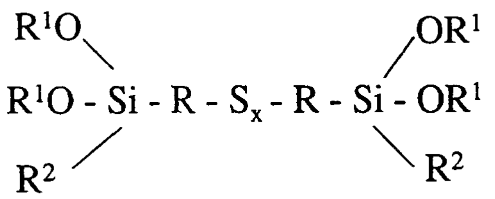

in der bedeutet:

$R^1$ einen einwertigen Alkylrest mit 1 bis 3 Kohlenstoffatomen

$R^2$ einen einwertigen Alkyl- oder Alkoxyrest mit 1 bis 3 Kohlenstoffatomen

R einen zweiwertigen Alkylrest mit 1 bis 5 Kohlenstoffatomen und

x einen Wert von 2,0 bis 6,0

und einem Füllstoff, die als granulatförmige Präparation vorliegen und aus 30 - 60 Gew.-% eines oder mehrerer Organosilane und 70 - 40 Gew.-% eines oder mehrerer Ruße bestehen (DE 2747277). Diese Gemische haben den Nachteil, daß sie einen relativ hohen Finesgehalt und einen hohen Anteil an der Perlfraktion kleiner 0,125 mm aufweisen.

Aufgabe der vorliegenden Erfindung ist es eine Organosilan-Präparation zur Verfügung zu stellen, die diese Nachteile nicht aufweist.

Gegenstand der Erfindung ist eine granulatförmige Organosilan-Präparation, bestehend aus einem Gemisch aus einem oder mehreren Organosilanen und einem oder mehreren Füllstoffen, welches dadurch gekennzeichnet ist, daß sie einen Feinstanteil von kleiner 2%, vorzugsweise kleiner 0.5%, gemessen nach ASTM D1508, aufweist.

Die Organosilan-Präparation kann eine Perlfraktion von kleiner 0.125 mm von weniger als 2%, vorzugsweise weniger als 0.5%, aufweisen.

Der Silangehalt der erfindungsgemäßen Organosilan-Präparation kann 1 bis 70 Gew.-%, vorzugsweise 40 bis 55 Gew.-%, bezogen auf die Organosilan-Präparation betragen. Als Organosilan können alle bekannten Organosilane,

vorzugsweise Si 69, Si 264, Si 230, Si 116, Si 216, Si 203, Si 108, Si 118, Si 208, Si 255, Si 270, Si 275, Si 75, Dynasilan MTMO oder Dynasilan MEMO der Firma Degussa-Hüls AG eingesetzt werden.

Der Füllstoffgehalt kann 30 bis 99 Gew.-%, vorzugsweise 45 bis 60 Gew.-%, bezogen auf die erfindungsgemäße Organosilan-Präparation betragen. Als Füllstoffe können Gummiruße oder Pigmentruße, vorzugsweise Corax N 121, Corax N 110, Corax N 242, Corax N 234, Corax N 220, Corax N 375, Corax N 356, Corax 347, Corax N 339, Corax N 332, Corax N 330, Corax N 326, Corax N 550, Corax N 539, Corax N 683, Corax N 660, Corax N 774, Corax N 765, Corax N 650, Corax N 762, Durex 0, Corax 3, Corax 4, Corax 9, Corax P, Printex P, Corax S 315, CK 3, Corax XE-1, Printex L, Printex L 6, Corax L 29, Printex XE2, Farbruß FW 200, Farbruß FW 2, Farbruß FW 2 V, Farbruß FW 1, Farbruß FW 18, Spezialruß 6, Farbruß S 170, Farbruß S 160, Spezialruß 5, Spezialruß 4, Spezialruß 4 A, Printex 150 T, Printex U, Printex V, Printex 140 U, Printex 140 V, Printex 95, Printex 90, Printex 85, Printex 80, Printex 75, Specialruß 550, Printex 55, Printex 45, Printex 40, Printex 60, Printex XE 2, Printex L 6, Printex L, Printex 300, Printex 30, Printex 3, Spezialruß 350, Printex 35, Spezialruß 250, Printex 25, Printex 200, Printex A, Spezialruß 100, Printex G, Flammruß 101 der Firma Degussa-Hüls AG, beschrieben in "Information für die Gummiindustrie", Degussa AG, PT 39-4-05-1287 Ha und "Pigment Blacks" Degussa AG PT 80-0-11-10 86 Ha, eingesetzt werden.

Besonders bevorzugt können Ruße mit DBP-Werten größer 100 ml/100 g eingesetzt werden. Die Ruße können naßgeperlt, trockengeperlt oder als Pulver eingesetzt werden.

Ferner können als Füllstoffe Kieselsäuren, vorzugsweise Ultrasil VN3, Ultrasil VN2, Ultrasil 3370 oder Ultrasil 7000 der Firma Degussa-Hüls AG, eingesetzt werden.

Ein weiterer Gegenstand der Erfindung ist ein Verfahren zur Herstellung der granulatförmigen Organosilan-Präparation welches dadurch gekennzeichnet ist, daß man mindestens ein Organosilan mit einem Füllstoff vermischt und als Mischvorrichtung einen Mischgranulator verwendet. Der Füllstoff kann mittels einer gravimetrischen Pulverdosierung dem Mischgranulator zudosiert werden. Durch eine Stachelwelle kann das Mischgut zum Ausgang transportiert werden (Figur 1). Das Silan kann man volumetrisch oder gravimetrisch zudosieren. Das Silan kann mittels einer oder mehreren Düsen an einer oder mehreren Positionen eingedüst werden. Die Mischtemperatur kann 40° bis 140°C, vorzugsweise 60° bis 120°C, betragen. Die Drehzahl kann in dem Bereich von 100 bis 1500 UpM, vorzugsweise 100 bis 1000 UpM, variieren. Der Füllstoffdurchsatz kann von 10 bis 150 kg/h, vorzugsweise 20 bis 80 kg/h, variieren. Die Stromaufnahme kann von 10 bis 30 A betragen. Der Füllstoffdurchsatz für eine Produktionsanlage kann von 0,5 bis 1,5 t/h variieren. Die Umfangsgeschwindigkeit der Stachelspitzen kann zwischen 1 und 30 m/s, vorzugsweise zwischen 10 und 20 m/s, betragen. Die Verweilzeit des Füllstoffes in dem Mischgranulator kann zwischen 20 und 600 Sekunden betragen.

Neben der Art der Verdüsung des Organosilans ist auch der Ort der Verdüsung von wesentlichem Einfluß auf die Qualität der sich bildenden Präparation.

Der Mischgranulator besteht aus einem liegend angeordneten, feststehenden Rohr (Stator) mit einer sich darin drehenden Stachelwelle. Der Mischgranulator besitzt gewöhnlich einen Einlaufbereich, in dem der Ausgangsfüllstoff dem Mischgranulator zugeführt wird. In diesem Bereich befindet sich eine Förderschnecke, die dem zugeführten Füllstoff eine Bewegungskomponente in axialer Richtung aufprägt. An den Einlaufbereich schließt sich der eigentliche Granulationsbereich an, in dem der Füllstoff durch mechanische Einwirkung der sich drehenden Stacheln und durch Abrollen an der Innenwand des Stators agglomeriert. Nach Verlassen des Granulationsbereiches gelangt der nun schon perlförmige Füllstoff in den Auslaufbereich und wird aus dem Mischgranulator kontinuierlich ausgeschleust.

Je nach Konstruktion des Mischgranulators können die einzelnen Bereiche des Mischgranulators unterschiedliche Größen aufweisen. In jedem Fall sollten Einlauf- und Auslaufbereich zu Gunsten des Granulationsbereichs möglichst klein gehalten werden. Nach Eintritt des pulverförmigen Ausgangsfüllstoffes in den Granulationsbereich beginnt die Agglomeration des Füllstoffes und ist am Ende dieses Bereiches abgeschlossen. Um eine möglichst homogene Verteilung des Organosilans über den gesamten Querschnitt der Füllstoffperlen zu erhalten, ist es erforderlich, das Organosilan im ersten Drittel des Granulationsbereiches über den Füllstoff zu verdüsen. Die Einbringung des Organosilans in einem späteren Stadium der Perlbildung führt zu einem inhomogenen Aufbau der Füllstoffperlen und damit zu einer verringerten Perlhärte.

Eine weitere Verbesserung der Homogenität der Einmischung des Organosilans in den Füllstoff kann man erhalten, wenn zur Verdüsung mehrere Sprühdüsen eingesetzt werden, die in einer Ebene senkrecht zur Stachelwelle am Umfang des Stators verteilt sind. Die Zahl der Düsen kann zweckmäßiger Weise auf zwei bis fünf begrenzt werden. Die Düsen werden dabei in einer Ebene senkrecht zur Stachelwelle angeordnet, um eine gute Homogenität der Einmischung zu gewährleisten.

Durch den geringen Abstand der Stachelspitzen zur Innenwand des Stators können Ablagerungen weitgehendst vermieden werden. Dadurch kann eine homogenere Verteilung des Silans auf dem Füllstoff erfolgen.

Die erfindungsgemäße granulatförmige Organosilan-Präparation zeigt vorteilhafterweise eine bessere pneumatische Förderung, bessere Silierung und bessere Einarbeitbarkeit in Kautschuk gegenüber bekannten Organosilan-Präparationen.

Die erfindungsgemäße Organosilan-Präparation wird anhand der Figur näher erläutert. Es zeigt:

Figur 1: Schematische Darstellung des Mischgranulators.

Gemäß Figur 1 besteht der Mischgranulator aus einem liegend angeordneten feststehenden Rohr, dem Stator 1, und einer darin axial angeordneten sich drehenden Stachelwelle 2 mit den wendelförmig angeordneten Stacheln 3. Zwischen der Stachelwelle 2 und dem Stator 1 befindet sich der Perlraum des Mischgranulator. Der Füllstoff wird dem Granulator am Einlauf 5 zugeführt. Im Bereich des Einlaufs befindet sich auf der Stachelwelle 2 eine Förderschnecke 6, die den Füllstoff in axialer Richtung zum Auslauf 7 fördert. Der Stator 1 ist doppelwandig ausgeführt und erlaubt die Temperierung der Statorwandung mit Hilfe einer Flüssigkeit 8. Im ersten Drittel des Granulationsbereiches des Stators befinden sich auf seiner Oberseite Durchgangsbohrungen, durch die Sprühdüsen 9 für die Zugabe des Organosilans eingeführt werden.

Die granulatförmigen Organosilan-Präparationen werden in vulkanisierbaren Kautschukmischungen verwendet.

Beispiele

Als Füllstoff wird der Ruß N 330 Pulver verwendet. Seine physikalisch-chemischen Kenndaten sind in der Tabelle 1 aufgeführt.

Tabelle 1

| | Schüttdichte [g/l] | DBP [ml/100g] | CTAB [$m^2/g$] | Jodzahl [mg/g] | Feuchte [%] |
|---|---|---|---|---|---|
| N 330 | 77 | 122 | 86 | 93 | 0,5 |

Die verschiedenen Versuchseinstellungen des verwendeten Mischgranulators sind in der Tabelle 2 aufgeführt.

Als Vergleichsbeispiel wird eine Organosilan-Präparation gemäß Beispiel 1 DE 27 47 277 wie folgt hergestellt:

In einem trogförmigen Pulvermischer mit propellerartigem Mischwerkzeug und einem Inhalt von 150 Litern werden 10 kg des N 330 eingewogen, dann 10 kg Bis-(3-triäthoxysilylpropyl)-tetrasulfid (Kurzbezeichnung: Si 69) hinzugefügt und beide 25 Sekunden bei 360 UpM durchgearbeitet und homogenisiert. Die verwendete Vorrichtung ist in der DE-OS 15 92 861 beschrieben.

Tabelle 2

| Beispiel | | 1 | 2 | 3 | 4 | 5 |
|---|---|---|---|---|---|---|
| N 330 | kg/h | 25 | 25 | 26,5 | 26,5 | 33 |
| Si 69 | kg/h | 26,4 | 26,4 | 26,5 | 26,5 | 36 |
| Silangehalt | Gew.-% | 51,4 | 51,4 | 50,0 | 50,0 | 52,2 |
| Düsenposition | 5 cm nach Einlauf des Rußpulvers | | | | | |
| Düse | mm | 1,3 | 1,3 | 1,3 | 1,3 | 1,3 |
| Düsendruck | bar | 4 | 1,5 | 1,5 | 0,8 | 1,5 |
| Mischer Drehzahl | UpM | 650 | 650 | 714 | 650 | 550 |
| Mischer Stromaufnahme | A | 15,5 - 16,5 | 16,5 - 17,5 | 16 - 17,5 | 15,5 - 17 | 15,5 -18 |
| Mischer Temperatur | °C | 100 | 100 | 100 | 100 | 100 |
| Endprodukt-Temperatur | °C | ca. 60 | ca. 60 | ca. 60 | | ca. 60 |

Die charakteristischen Daten der erhaltenen Organosilan-Präparationen sind in den Tabellen 3 und 4 aufgeführt.

Tabelle 3:

| **Methode** | **Einheit** | **Vergleichsbeispiel gemäß DE 2747277** | **Beispiel 1** | **Beispiel 2** | **Beispiel 3** | **Beispiel 4** | **Beispiel 5** |
|---|---|---|---|---|---|---|---|
| Feinstanteil | % | 17,9 | 0,2 | 0,3 | 0,0 | 0,2 | 0,2 |
| Perlspektrum | | | | | | | |

(fortgesetzt)

| Methode | Einheit | Vergleichsbeispiel gemäß DE 2747277 | Beispiel 1 | Beispiel 2 | Beispiel 3 | Beispiel 4 | Beispiel 5 |
|---|---|---|---|---|---|---|---|
| < 0.125 mm | % | 21,4 | 0,2 | 0,1 | 0,0 | 0,1 | 0,2 |
| 0.125 - 0.25 mm | % | 10,1 | 0,4 | 0,4 | 0,2 | 0,8 | 0,5 |
| 0.25 - 0.50 mm | % | 14 | 2,4 | 3,4 | 1,8 | 4,2 | 2,4 |
| 0.50 - 0.71 mm | % | 9,9 | 6,97 | 6,6 | 5,5 | 9,7 | 4,5 |
| 0.71 - 1.0 mm | % | 11,6 | 35,7 | 25,0 | 24,8 | 43,9 | 27,6 |
| 1.0 - 1.5 mm | % | 15,3 | 45,9 | 58,1 | 64,6 | 39,4 | 56,3 |
| > 1.5 mm | % | 17,7 | 8,4 | 6,2 | 3,1 | 1,9 | 18,6 |
| **Flüchtige Anteile** | % | 0,52 | 0,60 | 0,58 | 0,83 | 0,75 | 0,60 |
| **Schwefelgehalt** | % | 11,42 | 11,60 | 11,59 | 11,33 | 11,04 | 12,16 |

Tabelle 4

| Beispiel | Optische Beurteilung |
|---|---|
| **Beispiel 1** | Unterschiedliche Verperlung mit einigen Agglomeraten.<br>Farbe dunkelgrau<br>Sehr gutes Fließverhalten |
| **Beispiel 2** | Wie bei Beispiel 1 |
| **Beispiel 3** | Gleichmäßige Verperlung mit einigen Agglomeraten<br>Farbe: dunkelgrau<br>Sehr gutes Fließverhalten |
| **Beispiel 4** | Gleichmäßige microperlartige Verperlung mit einigen Agglomeraten.<br>Farbe: dunkelgrau<br>Sehr gutes Fließverhalten |
| **Beispiel 5** | Sehr grobes Material mit einigen Agglomeraten.<br>Farbe: dunkelgrau<br>Sehr gutes Fließverhalten |

Die erfindungsgemäßen Organosilan-Präparationen zeigen im Vergleich zu dem Vergleichsbeispiel gemäß DE 27 47 277 einen deutlich niedrigeren Feinstanteil und einen geringeren Perlanteil für Perlen kleiner 0.125 mm. Eine Verstopfung der Leitungen bei pneumatischer Förderung ist somit nicht zu erwarten.

Ein Vergleich von mikroskopischen Aufnahmen (8-fache Vergrößerung) zeigt gemäß Figur 2 eine deutliche Verbesserung der Perlqualität und einen geringeren Feinstanteil. So zeigt Figur 2 a die Organosilanpräparation gemäß DE 27 47 277 Beispiel 1 und Figur 2 b die erfindungsgemäße Organosilan-Präparation gemäß Beispiel 4.

Während die bekannten Organosilan-Präparationen verbacken, zeigen die erfindungsgemäßen Organosilan-Präparationen in der optischen Beurteilung deutliche Vorteile.

Die analytischen Untersuchungen erfolgten nach den Vorschriften:

| | |
|---|---|
| Schüttdichte | ASTM D1513 |
| DBP | ASTM D2414 |
| CTAB | ASTM D3765 |
| Jodzahl | ASTM D1510 |
| Feuchte | ASTM D1509 |
| Feinstanteil | ASTM D1508 |
| Flüchtige Anteile | ASTM D1509 |

(fortgesetzt)

| | |
|---|---|
| Schwefelgehalt | DIN 51400 |

Die Perlgrößenverteilung wird wie folgt bestimmt:

Die Siebe (Standardsiebe U.S. Höhe 25 mm, Durchmesser 200 mm, Öffnungsweite 0,125 mm, 0,25 mm, 0,50 mm, 0,71 mm, 1,0 mm, 1,5 mm) und der Auffangbehälter werden in der vorgesehenen Reihenfolge, das heißt mit von oben nach unten abnehmender Öffnungsweite, zusammengesteckt. Man wiegt 100 g des zu untersuchenden Rußes ab, wobei eine passende Schaufel verwendet wird. Auf keinen Fall darf der Ruß aus dem Gebinde ausgegossen werden, da dann eine Vorauswahl der Perlen auftreten würde. Nach Überführen des abgewogenen Rußes auf das oberste Sieb wird der Deckel aufgesetzt und der Stapel so in die Siebmaschine (Ro-tap Nr. 704) eingesetzt, daß ein Spiel von ca. 1,5 mm verbleibt und die Siebe somit frei rotieren können. Die Abdeckplatte soll mit einem Korkstopfen versehen sein. Die Siebe werden in der Maschine befestigt und dann 1 Minute lang - mit dem Hammer in Betrieb - geschüttelt. Danach nimmt man die Siebe nacheinander auseinander und wiegt die jeweils darin befindliche Rußmenge auf 0,1 g genau aus.

Beurteilung des Silierverhaltens

Um einen störungsfreien Betrieb eines Silos zu gewährleisten, muß die Geometrie des Auslauftrichters bekannt sein. Diese kann durch Messung der Fließeigenschaften von Schüttgütern sowie deren Verfestigungsverhalten während der Silolagerzeit mit einem Schergerät nach Jenike ermittelt werden. Eine verfahrenstechnische Silodimensionierung liefert den Neigungswinkel Θ der Trichterwand eines axialsymmetrischen (runde Grundfläche) oder eines ebenen (rechteckige Grundfläche) Silos gegen die Vertikale und den Mindestdurchmesser Dmin beziehungsweise die Mindestbreite Bmin der Austragöffnung, bei deren Einhaltung ein störungsfreier Betrieb des Silos gewährleistet wird. Wird der vorgegebene Trichterneigungswinkel eingehalten oder unterschritten, stellt sich beim Produktaustrag Massenfluß (Figur 3.1) als Fließprofil im Schüttgutbehälter ein, das heißt, der gesamte Behälterinhalt ist gleichmäßig in Bewegung. Dies vorausgesetzt, kann der Materialaustrag nur noch durch die Bildung stabiler Schüttgutbrücken (Figur 3.2) unterbrochen werden. Führt man den Durchmesser der Austragöffnung groß genug aus, kann sich beim Produktaustrag keine stabile Schüttgutbrücke bilden. Verfestigt sich ein Schüttgut während der Lagerung, nimmt der Mindestdurchmesser der Austragöffnung zur Verhinderung der Brückenbildung im Maße der Schüttgutverfestigung zu. Kann Massenfluß als Fließprofil nicht realisiert werden,stellt sich Kernfluß (Figur 3.3) als Fließprofil ein. Herrscht Kernfluß in einem Schüttgutbehälter, kann die Bildung eines stabilen Schüttgutschachtes (Figur 3.4) die Restentleerung eines Silos unmöglich werden lassen. Die Neigung der Trichterwand besitzt dann keinen Einfluß auf das Austragsverhalten des Schüttgutes, die Dimensionierung der Austragöffnung wird dann hinsichtlich der Vermeidung eines stabilen Schachtes vorgenommen.

Zur allgemeinen Beschreibung der Fließfähigkeit ist der Fließfähigkeitsindex nach Jenike geläufig. Die Schüttgutfestigkeit fc reicht zur Beurteilung der Fließfähigkeit eines Schüttgut alleine nicht aus, da sie von der Verfestigungsspannung σ1 abhängt. Jenike hat deshalb als Maß für die Fließfähigkeit eines Schüttgutes den ffc-Wert, das Verhältnis von Verfestigungsspannung und Schüttgutfestigkeit, eingeführt.

$$ffc = \frac{\sigma 1}{fc}$$

Je kleiner der ffc-Wert, desto schlechter fließt das Schüttgut. Nach Jenike gilt folgende Einteilung:

| | |
|---|---|
| ffc > 10 | frei fließend |
| ffc 10-4 | leicht fließend |
| ffc 4-2 | kohäsiv |
| ffc <2 | sehr kohäsiv, nicht fließend |

Da der ffc-Wert von der Verfestigungsspannung abhängt, ist es sinnvoll, beim Vergleich der Fließfähigkeit von Schüttgütern immer das gleiche Spannungsniveau anzusetzen.

Die zur verfahrenstechnische Silodimensionierung notwendigen Kenngrößen und den Fließfähigkeitsindex ffc kann man anhand von Scherversuche an einem Schergerät nach Jenike (Messung des Scherweg- / Scherkraftverlaufes bei verschiedenen Normalspannungen und der Bestimmung der Reibungsverhältnisse zwischen Behälterwandmaterial

und Schüttgut) (Peter Mertens: Silohandbuch, Ernst + Sohn Verlag, Berlin 1988, S. 50 - 52) ermitteln.

Anhand solcher Scherversuch wird ein Vergleich des Fließ- und Lagerverhaltens des erfindungsgemäßen Produktes und des Vergleichsbeispiels gemäß DE 27 47 277 vorgenommen und eine verfahrenstechnische Silodimensionierung für ein Silo mit einer angenommenen Wandneigung von 25° gegen die Vertikale durchgeführt.

Tabelle 5

| Momentanfließverhalten des Vergleichsbeispiels gemäß DE 27 47 277 | | | | | | | | | |
|---|---|---|---|---|---|---|---|---|---|
| | Anscherspannung 2580 Pa | | | Anscherspannung 3850 Pa | | | Anscherspannung 7020 Pa | | |
| | σ1 [Pa] | fc [Pa] | ffc | σ1 [Pa] | fc [Pa] | ffc | σ1 [Pa] | fc [Pa] | ffc |
| Vergleichs beispiel DE 27 47 277 | 5310 | 1380 | 3,8 | 7879 | 1984 | 4,0 | 14270 | 2853 | 5,0 |

Tabelle 6

| Schüttgutfestigkeit in Abhängigkeit von der Lagerzeit für das Vergleichsbeispiel gemäß DE 27 47 277 | | | | |
|---|---|---|---|---|
| | Anscherspannung: 3850 Pa | | | |
| | Schüttgutfestigkeit fc [Pa] | | | |
| Zeit [Tage] | 0 | 1 | 3 | 5 |
| Vergleichsbeispiel gemäß DE 27 47 277 | 1984 | 2220 | 3300 | 7730 |

Tabelle 7

| Mindestdurchmesser der Austragöffnung für ein angenommenes axialsymetrisches Silo mit einer Trichterwandneigung θax = 25° für das Vergleichsbeispiel DE 27 47 277 | | | | |
|---|---|---|---|---|
| | Mindestdurchmesser der Austragöffnung Dmin [mm] | | | |
| Zeit [Tage] | 0 | 1 | 3 | 5 |
| Vergleichsbeispiel gemäß DE 27 47 277 | 335 | 380 | 875 | 2640 |

Tabelle 8

| Momentanfließverhalten von Beispiel 5 | | | | | | | | | |
|---|---|---|---|---|---|---|---|---|---|
| | Anscherspannung 2120 Pa | | | Anscherspannung 3560 Pa | | | Anscherspannung 6460 Pa | | |
| | σ1 [Pa] | fc [Pa] | ffc | σ1 [Pa] | fc [Pa] | ffc | σ1 [Pa] | fc [Pa] | ffc |
| Beispiel 5 | 5360 | 470 | 11 | 8880 | 820 | 11 | 16010 | 2095 | 7,6 |

Tabelle 9

| Schüttgutfestigkeit in Abhängigkeit von der Lagerzeit für Beispiel 5 | | | | |
|---|---|---|---|---|
| | Anscherspannung : 3560 Pa | | | |
| | Schüttgutfestigkeit fc [Pa] | | | |
| Zeit [Tage] | 0 | 1 | 7 | 14 |
| Beispiel 5 | 470 | 640 | 640 | 640 |

Tabelle 10

| Mindestdurchmesser der Austragöffnung für ein angenommenes axialsymetrisches Silo mit einer Trichterwandneigung θax = 25° für Beispiel 5 | | | | |
|---|---|---|---|---|
| | Mindestdurchmesser der Austragöffnung Dmin [mm] | | | |
| Zeit [Tage] | 0 | 1 | 7 | 14 |
| Beispiel 5 | <30 | 30 | 30 | 30 |

Der Vergleich der Mindestdurchmesser zur Vermeidung von Brückenbildung, der Schüttgutfestigkeiten und des Fließfähigkeitsindex zeigt, daß das nach dem erfindungsgemäßen Verfahren hergestellte Produkt deutlich bessere Fließ- und Siliereigenschaften besitzt (Tabelle 5-10). Es fließt nach zweiwöchiger Lagerung problemlos aus einem Silo aus. Bei der Silierung des Vergleichsbeispiel gemäß DE 27 47 277 ist bereits nach dreitägiger Lagerung mit Austragproblemen zu rechnen.

Beurteilung des Förderverhaltens

Die Beurteilung des Förder- und Abriebsverhaltens in pneumatischen Förderanlagen erfolgte anhand von Förderversuchen in einer Dünn- und einer DichtstromFörderanlage. Zu diesem Zweck wird das Fördergut mehrfach in den nachfolgend beschriebenen Förderanlagen mit den angegebenen Einstellungen transportiert. Der Vergleich des Abriebverhaltens erfolgte anhand von Partikelgrößenverteilungen des Aufgabe- und des geförderten Gutes und einer Bilanzierung des anfallenden Feingutes.

Flugförderanlage

Die Flugförderanlage besteht im Wesentlichen aus einem Aufgabebehälter mit einer Durchblaseschleuse zur Gutaufgabe, einem darüber angeordneten Sammelbehälter, einem Stickstoffnetzanschluß zur Druckerzeugung, zwei Zyklonen zur Gutabscheidung und einem nachgeschalteten Filter. Die Förderleitung hat eine Länge von 44 m, davon 6,3 m als vertikale Steigleitung und besitzt sieben 90°-Bögen. Der Leitungsinnendurchmesser beträgt 56,3 mm. Die Anlage wird mit Stickstoff betrieben. Zwecks besserer Feingutabscheidung wird nur einer der beiden Zyklone genutzt.

Dichtstromförderanlage

Die Dichtstromförderanlage besteht im Wesentlichen aus einem Drucksendebehälter, einer in Schlauch ausgeführten Förderleitung ($D_{innen}$= 60 mm) und einem Abscheidebehälter, dem ein Staubfilter nachgeschaltet ist. Die Förderlänge beträgt 39 m, von denen 5,7 m als vertikal Steigleitung verlaufen. Die Leitung besitzt vier 90°-Bögen und einen 180°-Bogen. Das Fördergas (Stickstoff) wird in zwei Teilströmen (Ober- und Unterluft) über Lavaldüsen aufgegeben.

In den Tabellen 11-13 sind die Förderbedingungen / Einstellungen aufgelistet.

Tabelle 11

| Flugförderung Beispiel 5 | | |
|---|---|---|
| | Versuch 1 | Versuch 2 |
| Gasmassenstrom [kg/h] | 200 | 300 |
| Volumenstrom [$m^3$/h] | 166,7 | 250,0 |
| Druckverlust [mbar] | 225 | 315 |
| Einwaage [kg] | 49,6 | 50,8 |
| Zeit [min] | 3,58 | 2,5 |
| Massenstrom [kg/h] | 831 | 1219 |
| Beladung μ [kg Feststoff/kg Fördergas] | 4,2 | 4,1 |
| v Fördergas [m/s] | 18,8 | 28,2 |

(fortgesetzt)

| Flugförderung Beispiel 5 | | |
|---|---|---|
| | Versuch 1 | Versuch 2 |
| Dichte Gas [kg/m$^3$] | 1,2 | 1,2 |
| Temperatur Gas [°C] | 20 | 20 |
| Gesamtförderstrecke [m] | 132 | 132 |

Tabelle 12

| Dichtstromförderung Versuch 1 | | | | | | |
|---|---|---|---|---|---|---|
| Oberluft | | | | Unterluft | | |
| Düse: | 10 | | | Düse | 45 | |
| Vordruck stat: | 1 | bar | | Vordruck stat: | 3 | bar |
| Vordruck dyn.: | 1 | bar | | Vordruck dyn.: | 2,5 | bar |
| Zähler Anfang | 821,7 | | | Zähler Anfang | 1683,53 | |
| Zähler Ende: | 821,7 | | | Zähler Ende: | 1684,1 | |
| Zeit: | 3 | Min | | | 2,3 | |
| Volumenstrom | 0,0 | m$^3$/h | | Volumenstrom | 11,4 | m$^3$/h |
| Gesamtvolumenstrom | | | 11,4 m$^3$/h | | | |
| V gemessen | | m$^3$/h | | V gemessen | 12,1 | m$^3$/h |
| Förderdruck | 1,2 | bar | | Förderdruck | 2 | bar |
| Einwaage | 46 | kg | | | | |
| Massenstrom | 920 | kg/h | | | | |
| Beladung $\mu$ | 67,3 | kg Feststoff/kg Fördergas | | | | |
| v Fördergas | 1,1 | m/s | | | | |
| Dichte Gas | 1,2 | kg/m$^3$ | | | | |
| Temperatur Gas | 20 | °C | | | | |
| Gesamtförderstrecke | 200 | m | | | | |

Tabelle 13

| Dichtstromförderung Versuch 2 | | | | | | |
|---|---|---|---|---|---|---|
| Oberluft | | | | Unterluft | | |
| Düse: | 45 | | | Düse: | 55 | |
| Vordruck stat: | 2,8 | bar | | Verdruck stat: | 3 | bar |
| Vordruck dyn.: | 2,2 | bar | | Vordruck dyn.: | 2,5 | bar |
| Zähler Anfang: | 834,22 | | | Zähler Anfang | 1688,34 | |
| Zähler Ende: | 824,6 | | | Zähler Ende | 1688,65 | |
| Zeit: | 1,25 | Min | | | 1,25 | |
| Volumenstrom | 18,2 | m3/h | | Volumenstrom | 14,9 | m3/h |
| Gesamtvolumenstrom | | 33,1 m3/h | | | | |

(fortgesetzt)

| Dichtstromförderung Versuch 2 | | | | | | |
|---|---|---|---|---|---|---|
| V gemessen | | m3/3 | | V gemessen | | m3/h |
| Förderdruck | 2,2 | Bar | | Förderdruck | 2,5 | bar |
| Einwaage | 51 | Kg | | | | |
| Massenstrom | 2448 | Kg/h | | | | |
| Beladung μ | 61,6 | KgFeststoff/kg Fördergas | | | | |
| v Fördergas | 3,3 | m/s | | | | |
| Dichte Gas | 1,2 | Kg/m3 | | | | |
| Temperatur Gas | 20 | °C | | | | |
| Gesamtförderstrecke | 200 | m | | | | |

In den Tabellen 14 bis 17 sind die Werte für Durchgang D 90 %, D 50 % und D 10 % der Durchgangssummenverteilung des geförderten Materials und des Ausgangsmaterials aufgelistet.

Tabelle 14

| Flugförderung Versuch 1 | | | |
|---|---|---|---|
| Durchgang | Ausgangsmaterial | Förderstrecke: 42 m | Förderstrecke: 132 m |
| D 10 % | 890 | 990 | 900 |
| D 50 % | 1270 | 1480 | 1670 |
| D 90 % | 1760 | 2200 | 2060 |

Tabelle 15

| Flugförderung Versuch 2 | | | |
|---|---|---|---|
| Durchgang | Ausgangsmaterial | Förderstrecke: 42 m | Förderstrecke: 132 m |
| D 10 % | 810 | - | 720 |
| D 50 % | 1210 | - | 1120 |
| D 90 % | 1775 | - | 1670 |

Tabelle 16

| Dichtstromförderung Versuch 1 | | | |
|---|---|---|---|
| Durchgang | Ausgangsmaterial | Förderstrecke: 39 m | Förderstrecke: 195 m |
| D 10 % | 790 | 1080 | 850 |
| D 50 % | 1190 | 1510 | 1245 |
| D 90 % | 1975 | 2095 | 1810 |

Tabelle 17

| Dichtstromförderung Versuch 2 | | | |
|---|---|---|---|
| Durchgang | Ausgangsmaterial | Förderstrecke: 39 m | Förderstrecke: 195 m |
| D 10 % | 840 | 700 | 650 |

(fortgesetzt)

| Dichtstromförderung Versuch 2 | | | |
|---|---|---|---|
| Durchgang | Ausgangsmaterial | Förderstrecke: 39 m | Förderstrecke: 195 m |
| D 50 % | 1240 | 1110 | 1090 |
| D 90 % | 1810 | 1610 | 1590 |

Das erfindungsgemäße Produkt kann im Dicht- und Dünnstrom innerhalb der genannten Grenzen problemlos und betriebssicher gefördert werden. Flug- als auch Dichtstromförderung bis zu einer Fördergasgeschwindigkeit von 28m/s verursachen keinen relevanten Anstieg des Feinkornanteils. Das Material liegt nach Flugförderung über eine Weglänge 132m beziehungsweise Dichtstromförderung über eine Weglänge von 195 m als staubfreies Granulat vor. Das Fördergut besitzt nach dem pneumatischen Transport unverändert gute schüttguttechnische Eigenschaften.

## Patentansprüche

1. Granulatförmige Organosilan-Präparation, bestehend aus einem Gemisch aus einem oder mehreren Organosilanen und einem oder mehreren Füllstoffen, **dadurch gekennzeichnet, daß** sie einen Feinstanteil von kleiner 2% gemessen nach ASTM D1508, aufweist.

2. Organosilan-Präparation nach Anspruch 1, **dadurch gekennzeichnet, daß** der Silangehalt 1 bis 70 Gew.-% bezogen auf die granulatförmige Organosilan-Präparation beträgt.

3. Organosilan-Präparation nach Anspruch 1 bis 2, **dadurch gekennzeichnet, daß** als Füllstoff Ruße oder Kieselsäuren eingesetzt werden.

4. Verfahren zur Herstellung der Organosilan-Präparationen **dadurch gekennzeichnet, daß** man mindestens ein Organosilan mit einem Füllstoff vermischt und als Mischvorrichtung einen beheizbaren Mischgranulator verwendet.

5. Verfahren zur Herstellung der Organosilan-Präparationen nach Anspruch 4, **dadurch gekennzeichnet, daß** man den Füllstoff mittels einer gravimetrischen Pulverdosierung zudosiert.

6. Verfahren zur Herstellung von Organosilan-Präparationen nach Anspruch 4, **dadurch gekennzeichnet, daß** man das Silan volumetrisch oder gravimetrisch zudosiert.

7. Verfahren zur Herstellung von Organosilan-Präparationen nach Anspruch 4, **dadurch gekennzeichnet, daß** man das Silan mittels einer oder mehreren Düsen an einer oder mehreren Position eindüst.

8. Verfahren zur Herstellung von Organosilan-Präparationen nach Anspruch 4, **dadurch gekennzeichnet, daß** man bei einer Mischtemperatur von 40° bis 140°C vermischt.

9. Verfahren zur Herstellung von Organosilan-Präparationen nach Anspruch 4, **dadurch gekennzeichnet, daß** man die Drehzahl des Mischgranulators in dem Bereich von 100 bis 1500 UpM variiert.

10. Verwendung der granulatförmigen Organosilan-Präparation nach Anspruch 1, in vulkanisierbaren Kautschukmischungen.

## Claims

1. Granular organosilane preparation consisting of a mixture of one or more organosilanes and one or more fillers, **characterized in that** it has a fines content of less than 2% as measured in accordance with ASTM D1508.

2. Organosilane preparation according to Claim 1, **characterized in that** the silane content amounts to from 1 to 70 wt.%, relative to the granular organosilane preparation.

3. Organosilane preparation according to Claim 1 or 2, **characterized in that** carbon black or silicas are used as filler.

4. Process for producing the organosilane preparations, **characterized in that** at least one organosilane is mixed with a filler and a heatable mixing granulator is used as a mixing device.

5. Process for producing the organosilane preparations according to Claim 4, **characterized in that** the filler is apportioned by means of gravimetric powder metering.

6. Process for producing organosilane preparations according to Claim 4, **characterized in that** the silane is apportioned volumetrically or gravimetrically.

7. Process for producing organosilane preparations according to Claim 4, **characterized in that** the silane is injected by one or more nozzles at one or more positions.

8. Process for producing organosilane preparations according to Claim 4, **characterized in that** mixing is carried out at a mixing temperature of from 40° to 140°C.

9. Process for producing organosilane preparations according to Claim 4, **characterized in that** the speed of the mixing granulator varies in a range from 100 to 1500 rpm.

10. Use of the granular organosilane preparation according to Claim 1 in vulcanizable rubber compounds.

**Revendications**

1. Préparation d'organosilane sous forme de produit granulé, consistant en un mélange d'une ou plusieurs organosilanes et d'une ou plusieurs charges, **caractérisée en ce qu'**elle comporte une proportion de particules les plus fines, mesurée selon ASTM D1508, inférieure à 2 %.

2. Préparation d'organosilane selon la revendication 1, **caractérisée en ce que** la teneur en silane va de 1 à 70 % en poids, par rapport à la préparation d'organosilane sous forme de produit granulé.

3. Préparation d'organosilane selon la revendication 1 ou 2, **caractérisée en ce qu'**on utilise en tant que charge du noir de carbone ou des acides siliciques.

4. Procédé pour la production des préparations d'organosilanes, **caractérisé en ce qu'**on mélange au moins un organosilane avec une charge et on utilise comme appareil de mélange un granulateur-mélangeur.

5. Procédé pour la production des préparations d'organosilanes selon la revendication 4, **caractérisé en qu'**on ajoute la charge par addition dosée au moyen d'un système gravimétrique d'alimentation en poudre.

6. Procédé pour la production des préparations d'organosilanes selon la revendication 4, **caractérisé en ce qu'**on ajoute le silane par addition dosée volumétrique ou gravimétrique.

7. Procédé pour la production des préparations d'organosilanes selon la revendication 4, **caractérisé en ce qu'**on injecte le silane au moyen d'une ou plusieurs buses en une ou plusieurs positions.

8. Procédé pour la production des préparations d'organosilanes selon la revendication 4, **caractérisé en ce qu'**on effectue le mélange à une température de mélange de 40 °C à 140 °C.

9. Procédé pour la production des préparations d'organosilanes selon la revendication 4, **caractérisé en ce qu'**on fait varier la vitesse de rotation du granulateur-mélangeur dans la plage de 100 à 1 500 tours/min.

10. Utilisation de la préparation d'organosilane sous forme de produit granulé selon la revendication 1, dans des compositions de caoutchouc vulcanisables.

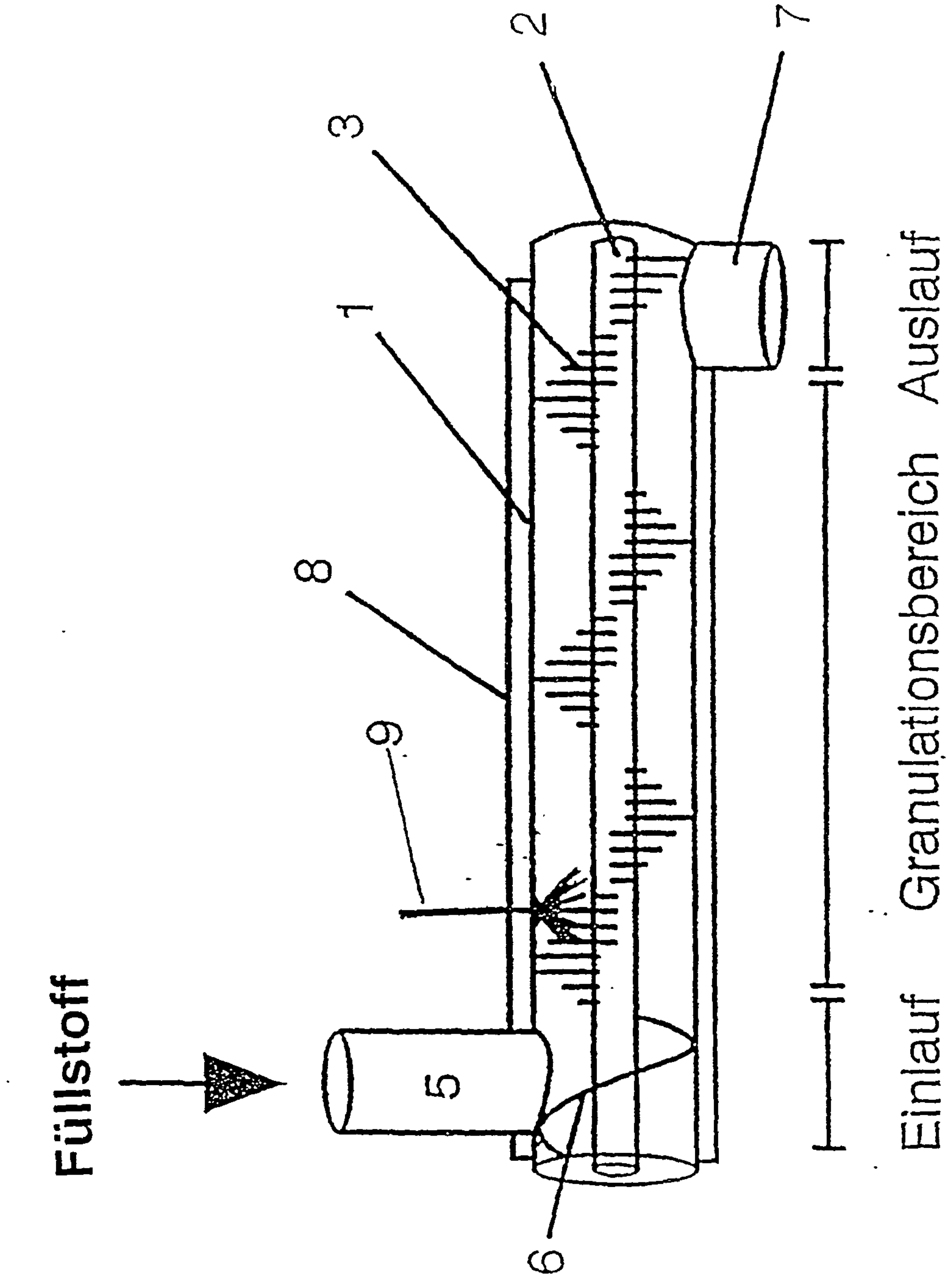
Füllstoff
5
6
9
8
1
3
2
7
Einlauf
Granulationsbereich
Auslauf

Figur 1

Figur 2a Vergleichsbeispiel nach DE 2747278

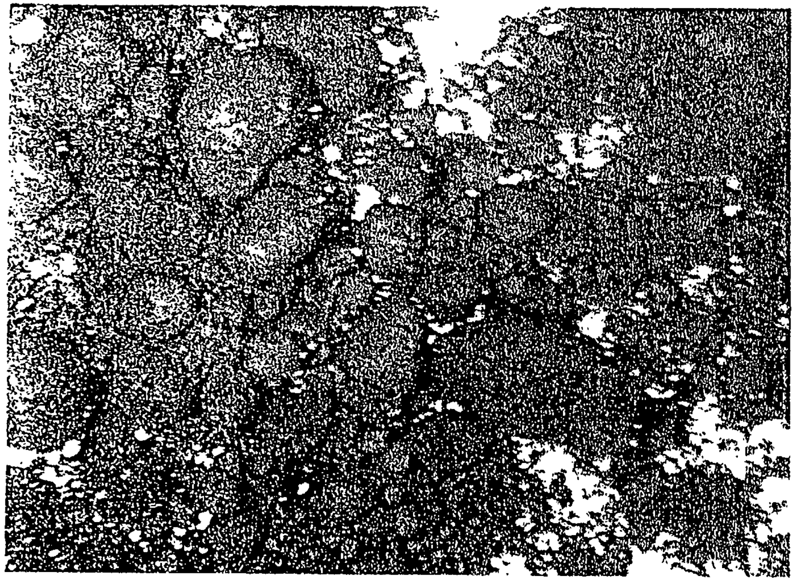

Figur 2 b Beispiel 4

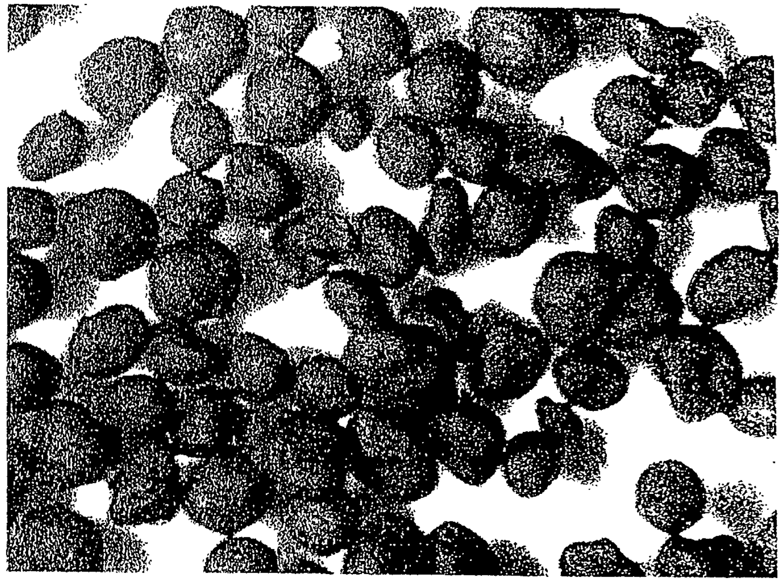

Fotografische Aufnahme des Granulates (ca. 8-fache Vergrößerung)

Figur 2

Massenfluß

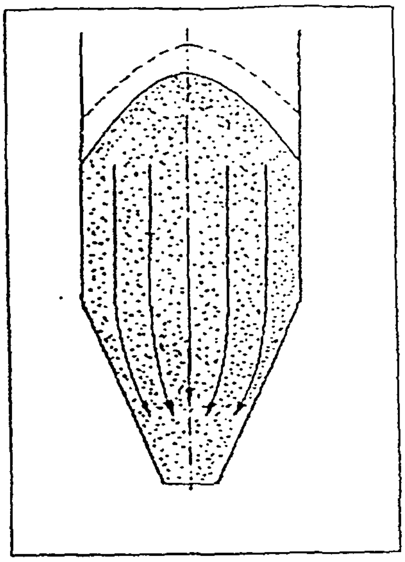

Figur 3.1

Brückenbildung

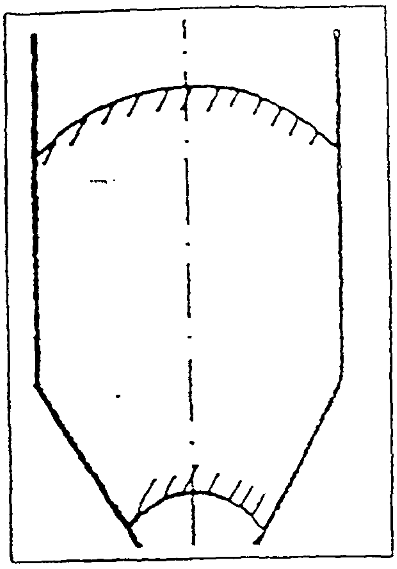

Figur 3.2

Kernfluß

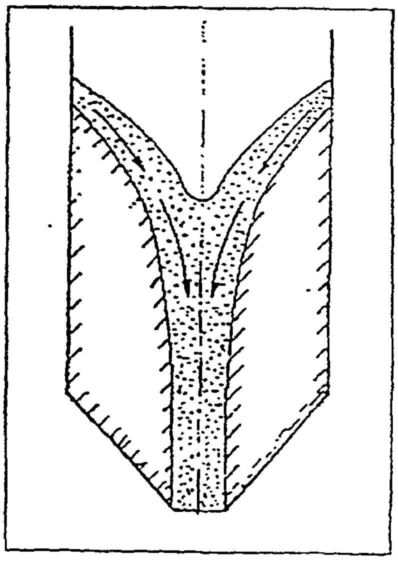

Figur 3.3

Schachtbildung

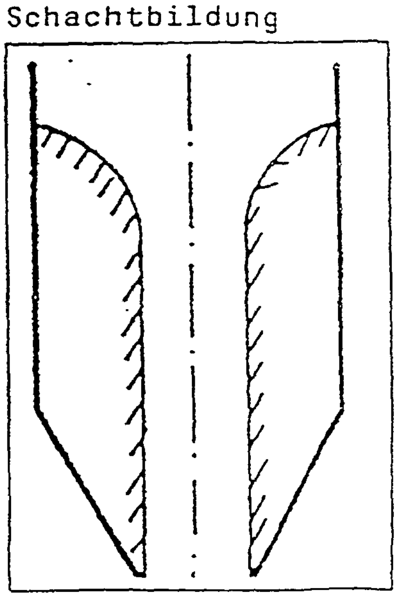

Figur 3.4

Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3842111 A
- DE 2255577 C
- US 3997356 A
- EP 0735579 A
- DE 2747277
- DE 1592861 A

### In der Beschreibung aufgeführte Nicht-Patentliteratur

- *Peter Mertens: Silohandbuch,* 1988, 50-52